# EUROPEAN PATENT APPLICATION

(11) **EP 2 716 468 A1**
(43) Date of publication of application: **09.04.2014**
(21) Application number: 12187173.5
(22) Date of filing: 04.10.2012
(51) Int. Cl.: B43K 29/00, G06F 3/033, G06F 3/042, G06F 3/03

(54) **Stylus body having two or more spheres coaxially affixed thereto**

(71) Applicant: BlackBerry Limited, Waterloo, ON N2K 0A7 (CA)
(72) Inventor: Pemberton-Pigott, Nigel Patrick, Waterloo, Ontario N2L 3W8 (CA)
(74) Representative: Bryn-Jacobsen, Caelia

(57) **Abstract**

A stylus body has two opposing ends (where a first one of these two ends includes an exposed writing tip) as well as a first sphere and a second sphere. The first sphere is fixed on the stylus body between the two opposing ends thereof. The second sphere is also fixed on the stylus. These two spheres and the exposed writing tip are disposed axially co-linear one to the other. By one approach the foregoing spheres have a reflective external surface. By another approach the foregoing spheres are at least translucent (if not transparent). In this case at least one light source can be disposed internal to the apparatus and configured to emit light through each of the spheres.

## Description

### Field of Technology

The present disclosure relates to styli that serve as a user-input interface for an electronic device.

### Background

Stylus-based user interfaces are known in the art. Generally speaking, a stylus is typically a hand-held writing utensil that often (but not exclusively) has a pencil-like elongated form factor and that includes at least one pointed end configured to serve as a writing tip by interacting with a drawing/writing surface. Using a stylus as an input mechanism with a display offers a variety of advantages over a fingertip including the opportunity for increased precision as well as an expression modality that accords with the user's own past experience with a pencil or pen.

Some styli are operationally passive while others are active and interact with a stylus-location sensor in some non-passive way. Generally speaking, stylus readers usually accommodate only a very limited application setting as regards use of the stylus itself. For example, use of the stylus may be limited to only a specific scribing surface or area. In cases where such a limitation does not apply, the stylus itself often includes considerable circuitry and programming to permit the stylus itself to be self-monitoring in these regards. Accordingly, typical prior art stylus solutions tend to be either highly limiting with respect to where and how a user can employ the stylus and/or represent a technically complicated and relatively expensive solution.

### Brief Description of the Drawings

FIG. 1 is a perspective view in accordance with the disclosure.

FIG. 2 is a front elevational view in accordance with the disclosure.

FIG. 3 is a front elevational view in accordance with the disclosure.

FIG. 4 is a front elevational detail view in accordance with the disclosure.

FIG. 5 is a schematic view in accordance with the disclosure.

FIG. 6 is a side elevational block diagram view in accordance with the disclosure.

FIG. 7 is a block diagram in accordance with the disclosure.

FIG. 8 is a perspective view in accordance with the disclosure.

FIG. 9 is a perspective view in accordance with the disclosure.

### Detailed Description

The following describes an apparatus pertaining to a stylus body and two opposing ends (where a first one of these two ends includes an exposed writing tip) as well as a first sphere and a second sphere. The first sphere is fixed on the stylus body between the two opposing ends thereof. The second sphere is also fixed on the stylus body. These two spheres and the exposed writing tip are disposed axially collinear one to the other.

By one approach the foregoing spheres have a reflective external surface. In this case the apparatus can further comprise a stylus-detector having a light source and one or more cameras configured to captures images of the first and second spheres (and in particular light from the light source that the spheres reflect towards the camera(s). Captured image information from the stylus-detector can then be readily employed to determine a present location of the stylus body and in particular a present location of the exposed writing tip.

By another approach the foregoing spheres are at least translucent (or even transparent). In this case at least one light source can be disposed internal to the apparatus and configured to emit light through each of the spheres. This approach will readily accommodate, for example, placing one such light source (such as a light-emitting diode (LED)) at the center of each such sphere. In this case the stylus detector need not itself include a light source or rely on other external light sources but can still comprise one or more cameras that are again configured to capture images of the spheres and in particular of the light emanating from within the spheres. And again, this captured-image information can be readily employed to calculate location information for the stylus body and its writing tip.

Such a stylus can be used with a specialized scribing surface or not as desired. These teachings will also readily accommodate use with a stylus having an ink-dispensing writing tip. Accordingly, such a stylus can be readily employed in a wide variety of application settings including scribing circumstances that include only a piece of paper or any other blank, passive surface of convenience.

Such a stylus will also accommodate stylus detection beyond merely tracking the location and movement of a writing tip. For example, the relative orientation of the stylus body (i.e., the stylus body's tilt) can also be readily determined by appropriate monitoring of the aforementioned spheres. Information regarding the present tilt of the stylus body, in turn, may be leveraged to further inform, for example, reducing latency as regards the real-time rendering of corresponding electronic ink.

The various embodiments set forth herein are relatively simple and inexpensive to manufacture and can be successfully utilized with a variety of image-based stylus-detection approaches and strategies. These teachings are also highly scalable and flexible in practice.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

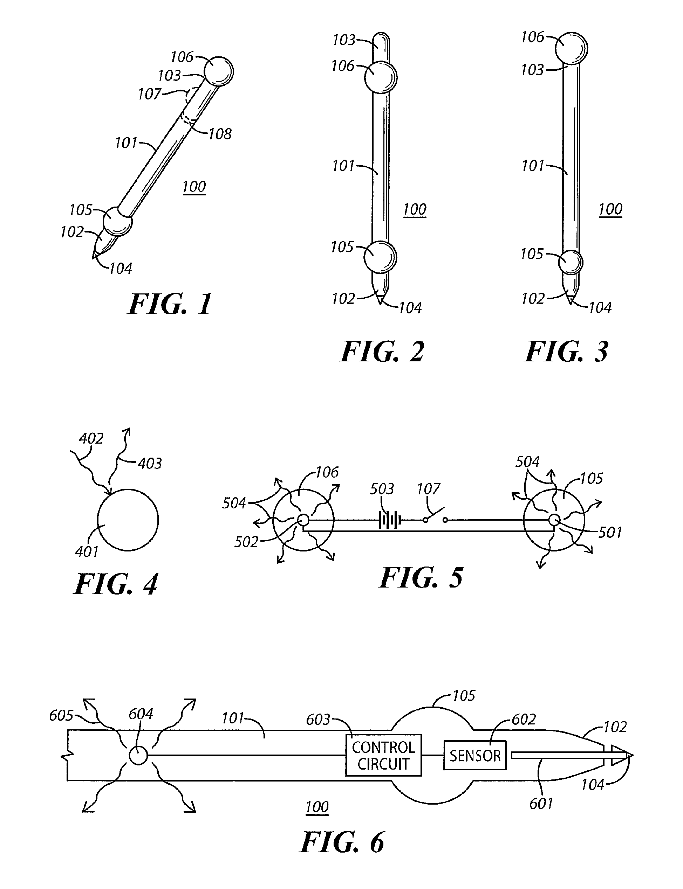

Referring to FIG. 1, a stylus 100 can comprise a stylus body 101 having a corresponding longitudinal axis and two opposing ends 102 and 103. A first one of these ends 102 includes an exposed writing tip 104 that is aligned coaxially with that longitudinal axis. By one approach this writing tip 104 may simply comprise a sharpened point of inert material such as a plastic of choice. By another approach this writing tip 104 may comprise an ink-dispensing writing tip such as a ball point pen tip as are known in the art. (These teachings will also accommodate having the opposing end 103 comprise a writing tip as well if desired.)

This stylus 100 also includes at least two spheres 105 and 106. A first one of these spheres 105 is fixed on the stylus body 101 coaxially with the longitudinal axis thereof. This first sphere 105 is also located between the two opposing ends 102 and 103. In this particular illustrative example this first sphere 105 is located proximal to the end 103 that comprises the writing tip 104. By one approach this first sphere 105 is disposed below a location on the stylus body 101 that might ordinarily be grasped or contacted by a user's hand (not shown) when manipulating the stylus 100 in ordinary scribing usage.

The second sphere 106 is also fixed on the stylus body 101 coaxially with the latter's longitudinal axis. In this particular illustrative example this second sphere 106 is attached to the end 103 of the stylus body 101. Such a configuration is not required, however. While generally speaking it can be useful for the two spheres 105 and 106 to each be disposed proximal to a corresponding opposing end 102 and 103, respectively, the second sphere 106 can be disposed inwardly of the stylus body's second end 103 if desired. FIG. 2 provides an illustrative example in these regards.

So configured, the first and second spheres 105 and 106 and the writing tip 104 are all aligned axially co-linear with one another.

For the sake of clarity the spheres 105 and 106 are depicted in many of these illustrations as being relatively large in comparison to the width of the stylus body 101. These teachings will readily accommodate other relative sizes, however, including both smaller-sized spheres and larger-sized spheres as desired. Also, in the examples shown in FIGS. 1 and 2, the two spheres 105 and 106 are substantially of a similar size. Again, however, these teachings are not so limited. As shown in FIG. 3, for example, the two spheres 105 and 106 can be differently sized. For example, the sphere 106 that is most distal to the writing tip 104 can be sized larger than the sphere 105 that is disposed most proximal to the writing tip 104 if desired.

In terms of absolute size, these teachings will accommodate a wide range of possibilities. For many application settings, however, it can be particularly useful if the spheres are at least 4 mm in diameter in order to help assure a useful range of reflection angles.

With reference to FIG. 4, by one approach these spheres 401 have a reflective external surface. So configured, that reflective external surface will tend to reflect externally-sourced incoming light 402 as corresponding reflected light 403. Generally speaking, for many application purposes the reflectivity of this external surface should be relatively uniform from one spot to another on that external surface. In other words, it can be helpful if one spot on the external surface is not more, or less, reflective than another spot on the external surface. (As used herein, this reference to a "reflective" external surface will be understood to refer to a surface that is more reflective than not and hence reflects more than fifty percent of the relevant frequency of light that is directed thereto.)

By another approach, and referring to FIG. 5, these spheres 105 and 106 are at least translucent and can even be transparent in some cases. In such a case the stylus 100 can further include one or more light sources 501 and 502 (such as light-emitting diodes (LED's)) that are disposed internal to the apparatus and that are configured to emit light 504 through at least one (and as illustrated, both) the first sphere 105 and the second sphere 106.

By one simple approach this can comprise, as illustrated, placing such a light source within a corresponding one of the spheres. These teachings will accommodate other approaches in these regards, however. As one example in these regards, a single light source can convey light via one or more internal light pipes to convey that light to the interior of the spheres 105 and 106.

By one approach these light sources 501 and 502 emit light in the visible spectrum. By another approach, one or both of these light sources 501 and 502 emit non-visible light (such as, for example, infrared light). As one useful approach in these regards the emitted light 504 can comprise an infrared frequency that is not ordinarily associated with solar light. Such a light frequency can be helpful to facilitate employing these teachings in a daylight setting.

By one approach such a circuit can further include a power source such as a battery 503 (or batteries) as well as a switch 107 (with such a switch 107 being shown as an optional component in FIG. 1 as well as in FIG. 5). So configured a user can switch the lighting on and off to thereby conserve battery power when not using the stylus 100.

Generally speaking, and at least for most application settings, the translucency of the spheres 105 and 106 should be relatively uniform from one location on the sphere to another. By one approach the interior and/or exterior surface of the spheres 105 and 106 can be textured to further aid in diffusing the light 504 being exuded therefrom.

Referring now to FIG. 6, these teachings will also accommodate optional inclusion of a pressure sensor 602 that is configured to detect pressure (such as axially-aligned or vectored pressure) on the writing tip 104 of the stylus 100. By one simple approach, this pressure sensor 602 can be disposed within the stylus body 101 and can be responsive to a rod 601 or other rigid or substantially rigid member that moves axially in response to writing pressure being applied to the writing tip 104. Any of a variety of pressure sensors 602 will serve in these regards including, by way of example, piezoelectric sensors. As such sensors, including writing pressure sensors, comprise a known area of endeavor, and as the present teachings are not unduly sensitive to any particular choices in these regards, further elaboration will not be provided here for the sake of brevity.

The pressure sensor 602 can operably couple to a control circuit 603 that is also disposed within the stylus body 101. This control circuit 603, in turn, can control the switching and/or modulation of a light source 604 that emits corresponding light 605. By one approach this light source 604 can comprise one or both of the aforementioned light sources 501 and/or 502 that are described as transmitting light through the translucent spheres. In such a case, and by way of example, the control circuit 603 can modulate that light as desired in order to indicate that the pressure sensor 602 is currently sensing pressure at the writing tip 104.

By another approach, the light source 604 can be separate and apart from the aforementioned light sources 501 and 502. In such a case a separate lens, such as a ring-shaped lens (as illustrated in FIG. 1 by reference numeral 108) that is disposed about a lateral periphery of the stylus body 101 can encircle the light source 604 and provide a means for the corresponding light to exit the stylus body 101. So configured, light indicating the detection of pressure at the writing tip 104 can again be provided, this time via that ring-shaped lens 108.

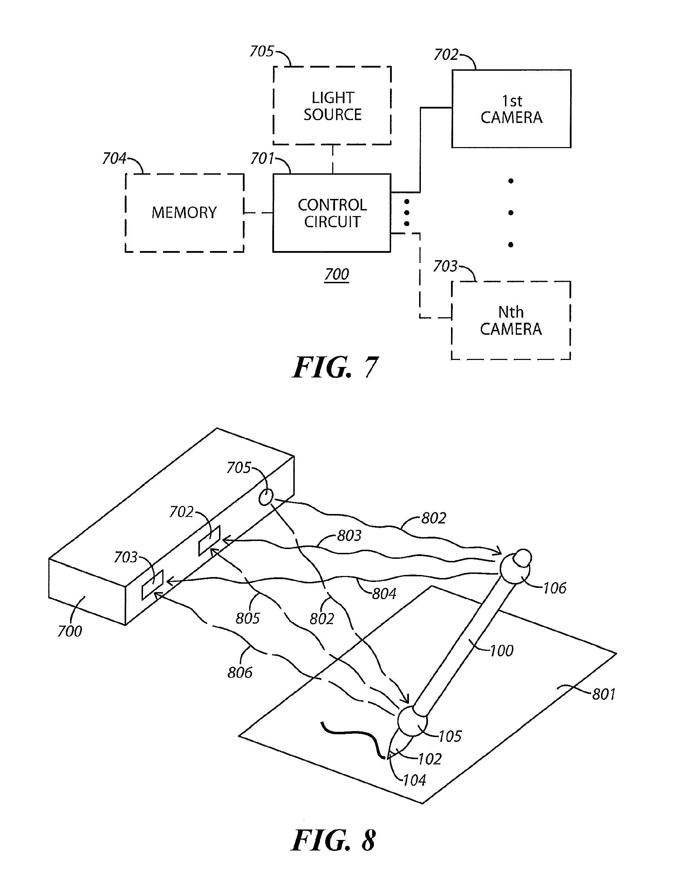

Whether inclusive of a pressure sensor or not, such a stylus 100 can be readily used in combination with a corresponding stylus detector 700 as shown in FIG. 7. Such a stylus detector 700 can comprise a control circuit 701 that operably couples to at least a first camera 702 and optionally to two or more cameras (represented here by an Nth camera 703, where "N" comprises an integer greater than "1"). For at least most application purposes this camera 702 comprises a digital camera such as a camera that uses a charge-coupled device (CCD) as the image-capture component.

By one approach, these cameras 702 and 703 are specifically configured to be sensitive to the light that is emitted from the aforementioned spheres 105 and 106 when the latter are illuminated from within. For example, when the spheres 105 and 106 emit light at a particular infrared frequency, these cameras 702 and 703 can be particular (or solely) sensitive to that particular infrared frequency.

Such a control circuit 701 can comprise a fixed-purpose hard-wired platform or can comprise a partially or wholly programmable platform. These architectural options are well known and understood in the art and require no further description here.

By one approach this control circuit 701 further operably couples to a memory 704. This memory 704 may be integral to the control circuit 701 or can be physically discrete (in whole or in part) from the control circuit 701 as desired. This memory 704 can serve, for example, to store (at least temporarily) captured images as provided by the camera(s) 702, 703. This memory 704 can also serve, for example, to non-transitorily store the computer instructions that, when executed by the control circuit 701, cause the control circuit 701 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both nonvolatile memory (such as read-only memory (ROM) as well as volatile memory (such as an erasable programmable read-only memory (EPROM).)

So configured, such a stylus detector 700 can capture images of both spheres 105 and 106 and use those images to calculate, for example, a particular present location of the writing tip 104. Such calculations are relatively straight forward when the dimensions of the spheres 105 and 106 are known a priori along with information regarding the distance between the spheres 105 and 106 and the distance from the first sphere 105 to the writing tip 104. By capturing a series of such images the movement of the stylus 100 and its writing tip 104 can be quickly and accurately tracked. For many application settings it will suffice to capture around thirty frames per second using each available camera.

As noted above, by one approach the spheres 105 and 106 are not internally illuminated but are configured to reflect externally-received light. In such a case, the stylus detector 700 can further include one or more light sources 705 that is (or are) controlled by the aforementioned control circuit 701. As illustrated in FIG. 8, light 802 from this light source 705 can reflect off the spheres 105 and 106 and this reflected light can provide the basis for corresponding images captured by the camera(s) 702 and 703. In particular, as illustrated, light 802 from the light source 705 can reflect off the second sphere 106 such that some reflected light 803 is available to the first camera 702 and some reflected light 804 is available (in this illustrative two-camera embodiment) to a second camera 703. Similarly, light 802 from the light source 705 also reflects off the first sphere 105 such that some reflected light 805 is available to the first camera 702 and some reflected light 806 is available to the second camera 703.

So configured, the stylus detector 700 is again able to capture and collect images of the two spheres 105 and 106 that permit the calculation of the location and orientation of the stylus 100 including the location and movement of the writing tip 104 with respect, for example, to a scribing surface 801 of choice.

Such a stylus detector 700 can comprise a standalone mechanism, if desired, or can comprise a part of a larger device such as, but not limited to, a so-called smartphone, a pad/tablet-styled computer, a laptop computer, and so forth.

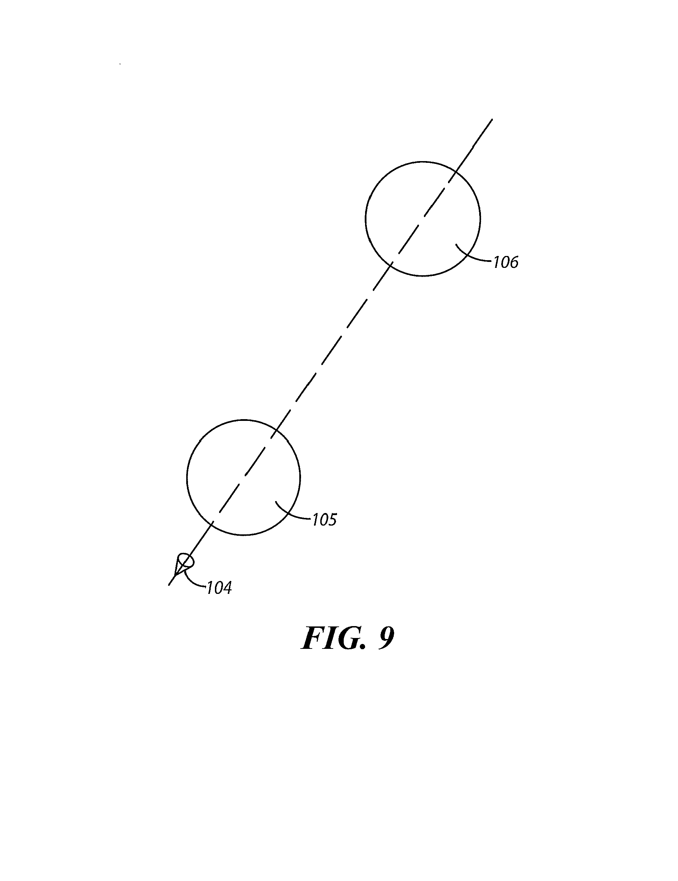

In many of the specific examples provided above the spheres 105 and 106 are affixed coaxially with respect to a longitudinal axis of the stylus body 101 itself. Such an approach serves well for the sake of an illustrative example and where the stylus body 101 comprises a simple cylinder. In fact, however, these teachings are not especially limited in these regards. Generally speaking, the stylus body can assume any of a variety of shapes including irregular shapes and even laterally-nonsymmetrical shapes if desired. In such a case, the stylus body itself may not have an actual (or easily recognized) longitudinal axis. In such a case, the benefits of these teachings will still apply provided the spheres 105 and 106 are axially co-linear with the writing tip 104 as illustrated in FIG. 9.

So configured, such a stylus 100 can be readily and reliably detected and imaged and the corresponding data readily utilized to calculate the position, orientation, and/or movement of the stylus 100 and/or specific portions thereof (such as a writing tip 104). Such a stylus 100 can be formed of relatively inexpensive materials using relatively simple and inexpensive manufacturing processes. That said, the accuracy by which the stylus's location/movement can be determined and the speed at which such calculations can be undertaken can be expected to rival or exceed many other prior art approaches that are considerably more complex and/or costly to implement.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus comprising:
a stylus body (101) having two opposing ends (102 and 103);
an exposed writing tip (104) disposed at one of the two opposing ends;
a first sphere (105) fixed on the stylus body between the two opposing ends;
a second sphere (106) fixed on the stylus body;
such that the first sphere, the second sphere, and the exposed writing tip are disposed axially co-linear with respect to one another.

2. The apparatus of claim 1 wherein the first sphere is larger than the second sphere.

3. The apparatus of claim 1 wherein the exposed writing tip comprises an ink-dispensing writing tip.

4. The apparatus of claim 1 wherein the first sphere and the second sphere are at least translucent.

5. The apparatus of claim 4 further comprising:
at least one light source (501, 502) disposed internal the apparatus and configured to emit light through at least one of the first sphere and the second sphere.

6. The apparatus of claim 5 wherein the light source emits non-visible light.

7. The apparatus of claim 1 wherein the first sphere and the second sphere have a reflective external surface.

8. The apparatus of claim 1 wherein the first sphere is disposed proximal a first end of the stylus body and the second sphere is disposed proximal a second end of the stylus body that opposes the first end of the stylus body.

9. The apparatus of claim 1 further comprising:
a stylus detector (700) comprising:
at least a first camera (702, 703) configured to capture images of the first and second spheres;
a control circuit (701) operably coupled to the first camera and configured to use the captured images to track movement of at least a portion of the stylus body with respect to a writing surface (801).

10. The apparatus of claim 9 wherein the first camera is configured to capture the images of the first and second spheres using externally-reflected light.

11. The apparatus of claim 9 wherein the first camera is configured to capture the images of the first and second spheres using light sourced from within the spheres.

12. The apparatus of claim 1 further comprising:
a pressure sensor (602) configured to detect pressure imposed on a tip of the stylus body.

13. The apparatus of claim 12 further comprising:
a light source (604) supported by the stylus body and configured to respond to the pressure sensor by signaling detected pressure using light.

14. The apparatus of claim 13 wherein the light source comprises a ring-shaped lens (108) disposed about a lateral periphery of the stylus body.

15. The apparatus of claim 13 wherein the light source emits light through at least one of the first sphere and the second sphere.
